Europäisches Patentamt

European Patent Office

Office européen des brevets

(11) Publication number: **0 210 590**
**A2**

(12) **EUROPEAN PATENT APPLICATION**

(21) Application number: 86110150.9

(22) Date of filing: 05.03.84

(51) Int. Cl.⁴: **C 02 F 5/14**

(30) Priority: 07.03.83 US 472808
14.02.84 US 578331

(43) Date of publication of application:
04.02.87 Bulletin 87/6

(84) Designated Contracting States:
AT BE CH DE FR GB IT LI LU NL SE

⅞¼Publication number of the earlier application
in accordance with Art. 76 EPC: 0 122 013

(71) Applicant: CALGON CORPORATION
Route 60-Campbell's Run Road
Robinson Township Pennsylvania 15205(US)

(72) Inventor: Persinski, Leonard J.
340 Orchard Spring Road
Pittsburgh Pennsylvania 15226(US)

(72) Inventor: Walker, Jerry L.
210 Norman Drive
Coraopolis Pennsylvania 15108(US)

(72) Inventor: Boffardi, Bennett P.
5723 Glen Hill Drive
Bethel Park Pennsylvania 15102(US)

(74) Representative: Crampton, Keith John Allen et al,
D YOUNG & CO 10 Staple Inn
London WC1V 7RD(GB)

(54) Polymeric additives for water.

(57) The formation of insoluble alluvial, metal oxide and metal hydroxide deposits in a cooling system, a reverse osmosis system, a desalination plant or a gas scrubber is inhibited by adding to the water in the system at least 0.1 mg/l of a water-soluble polymer comprising an unsaturated carboxylic acid and an unsaturated sulphonic acid, or their salts, the weight ratio of carboxylic to sulphonic acid being in the range 1:20 to 20:1, and at least one phosphonate.

EP 0 210 590 A2

# POLYMERIC ADDITIVES FOR WATER

This invention relates to polymeric additives for water.

Most industrial waters contain alkaline-earth metal cations, such as those of calcium, barium and magnesium, and several anions such as bicarbonate, carbonate, sulphate, oxalate, phosphate, silicate and fluoride. When combinations of these anions and cations are present in concentrations that exceed the solubility of their reaction products, precipitates form until these concentrations are no longer exceeded. For example, when the concentrations of calcium ion and carbonate ion exceed the solubility of calcium carbonate, a solid phase of calcium carbonate will form.

Such concentrations are exceeded for various reasons, such as partial evaporation of the aqueous phase, changes in pH, pressure and/or temperature, and the introduction of additional ions that form insoluble compounds with the ions already present in the solution.

As these reaction products are precipitated on the surfaces of the water-carrying system, they form scale or deposits, accumulation of which prevents effective heat transfer, interferes with fluid flow, facilitates corrosive processes, and harbours bacteria. Scale is an expensive problem in many industrial water systems and causes delays and shutdowns for cleaning and removal.

Scale-forming compounds can be prevented from precipitating by inactivating their cations with chelating or sequestering agents, so that the solubility of their reaction products is not exceeded. Generally, this requires as much chelating or sequestering agent as cation, since chelation is a stoichiometric reaction, and these amounts are not always desirable or economical.

Almost fifty years ago, it was discovered that certain inorganic polyphosphates would prevent such precipitation when added in amounts far less than the concentrations needed for sequestering or chelating. By "polyphosphates" is meant phosphates having a molar ratio of metal oxide to $P_2O_5$ in the range 1:1 to 2:1.

Certain water-soluble polymers, including groups derived from acrylamide and acrylic acid have been used to condition water-containing scale-forming compounds, for example, see U.S. Patent Specifications US-A-2,783,200; 3,514,476; 2,980,610; 3,285,886; 3,463,730 and 3,518,204.

U.S. Patent Specification US-A-3,928,196 discloses the use of a copolymer of 2-acrylamido-2-methylpropylsulphonic acid and acrylic acid in inhibiting scale.

In our prior European Patent Specification EP-A-0 122 013, from which the present application is divided, there is claimed an admixture comprising

(a)     a water-soluble polymer having a weight-average molecular weight of less than 25,000, as determined by light scattering, and that comprises (i) acrylic acid and/or methacrylic acid; and (ii) 2-acrylamido-2-methylpropyl sulphonic acid and/or 2-methacrylamido-2-methylpropyl sulphonic acid; where the weight ratio of (i):(ii) is in the range from 1:20 to 20:1; and

(b)     at least one compound that is an alkylphenoxy poly(ethyleneoxy) ethanol, a propylene-terminated ethylene oxide adduct, a polymer of maleic acid or anhydride, a polyacrylic acid, a phosphino carboxylic acid, a copolymer of acrylamide and an acrylate, a copolymer of acrylic acid and 2-hydroxypropyl acrylate, a copolymer of maleic acid or anhydride and a sulphonated styrene, a sulphonated polystyrene, a zinc salt or a molybdate salt; in which the weight ratio of (a):(b) is in the range 1:50 to 50:1 and its use in inhibiting the precipitation of scale-forming salts and inhibiting the corrosion of the metal in certain aqueous systems.

In addition, the formation of alluvial, metal oxide and metal hydroxide deposits is a problem in aqueous systems. The present invention is based on the discovery that the formation of such insoluble deposits in aqueous systems is inhibited by adding to the water in the system a water-soluble polymer comprising an unsaturated carboxylic acid or a salt of such an acid and an unsaturated sulphonic acid or a salt of such an acid, the weight ratio of carboxylic to sulphonic acid being in the range 1:20 to 20:1, together with at least one phosphonate, the combination of polymer and phosphonate having a greater effect than would be expected from the sum of their separate effects, i.e. being synergistic. Alluvial deposits include silt, clay, and particulate material extracted from the air, such as dust. Deposits of any metal oxide or metal hydroxide, e.g. iron oxide, chromous oxide, or zinc hydroxide, may also be inhibited.

The invention provides a method of inhibiting the formation of insoluble alluvial, metal oxide and metal hydroxide deposits in an aqueous system, comprising adding to the water in the system at least 0.1 mg/l of a water-soluble polymer, preferably having a weight average molecular weight of less than 25,000 as determined by low-angle laser light scattering, and comprising at least one unsaturated carboxylic acid or salt and at least one unsaturated sulphonic acid or salt in a weight ratio of 1:20 to 20:1, together with at least one phosphonate. The word "inhibiting", as applied to the formation of such deposits, includes threshold inhibition, dispersion, solubilization, and particle size reduction.

The phrase "aqueous system" includes any system containing water; including, but not limited to, water in cooling systems, boilers, desalination plants, gas scrubbers, blast furnaces, sewage sludge thermal conditioning equipment, reverse osmosis apparatus, sugar evaporators, paper processing, and mining circuits.

Among suitable unsaturated monocarboxylic acids are acrylic acid, methacrylic acid, α-haloacrylic acids, maleic acid or anhydride, itaconic acid or anhydride, vinylacetic acid, allylacetic acid, fumaric acid and/or β-carboxyethyl acrylate, and/or a salt of any such acid, and mixtures of two or more such materials. Acrylic and methacrylic acids are preferred.

Among suitable sulphonic acid(s) are 2-acrylamido-2-methylpropylsulphonic acid, 2-methacrylamido-2-methylpropylsulphonic acid, styrenesulphonic acid, vinylsulphonic acid, sulphoalkyl acrylate, sulphoalkyl methacrylate, allylsulphonic acid, methallylsulphonic acid, 3-methacrylamido-2-hydroxy-propylsulphonic acid, and sulphonic acid acrylate, and mixtures of two or more such acids. 2-acrylamido-2-methylpropylsulphonic acid is preferred.

The polymer may be prepared from more than two monomers. Monomers other than carboxylic and sulphonic acids or their salts may be present in the polymer. Mixtures of the polymers may be used.

The weight ratio of carboxylic acid to sulphonic acid is 1:20 to 20:1, preferably 1:10 to 10:1, and particularly 4:1 to 1:4.

Any water-soluble phosphonate may be used. Examples include 2-phosphono-1,2,4-tricarboxybutane, amino tri(methylene phosphonic acid), hydroxyethylidene diphosphonic acid, phosphonosuccinic acid, benzene phosphonic acid, 2-aminoethyl phosphonic acid, and polyamino phosphonates. Additional phosphonates are identified in U.S. Patent Specification US-A-3,837,803. The preferred phosphonates are 2-phosphono-1,2,4-tricarboxybutane, amino tri(methylene phosphonic acid) and hydroxyethylidene diphosphonic acid.

The weight ratio of polymer to phosphonate is preferably 1:50 to 50:1, particularly 1:10 to 10:1.

The following abbreviations and product names are used in the Examples and are defined as indicated:

AA/AMPS = copolymer of acrylic acid and 2-acrylamido-2-methylpropyl sulphonic acid having a weight average molecular weight of about 8200, as determined by low angle laser light scattering.

CL361S = an aqueous solution of alkyl phenoxy poly(ethyleneoxy) ethanols and propylene oxide terminated ethylene oxide adduct, available from Calgon Corporation.

PMA = polymaleic acid, MWT = 1300, as determined by light scattering, 70 percent active.

HEDP = hydroxyethylidene diphosphonic acid.

PBS-AM = 2-phosphono-1,2,4-tricarboxybutane, manufactured by Mobay Chemical Corporation.

Natrol 42 = a solution of a 60/40 copolymer of acrylic acid and 2-hydroxypropyl acrylate, manufactured by National Starch Corporation.

Belclene 500 = phosphinocarboxylic acid, manufactured by Ciba Geigy.

Versa TL-3 = copolymer of maleic anhydride and sulphonated styrene, manufactured by National Starch Corporation.

Versa TL-70 = sulphonated polystyrene, manufactured by National Starch Corporation.

PAA = polyacrylic acid, MWT 4700, as determined by light scattering.

AMPS = acrylamido methyl propyl sulphonic acid.

AMP = amino tri(methylene phosphonic acid).

0210590

P-35 = copolymer of 40 percent acrylamide and 60 percent acrylate, MWT 7500, manufactured by American Cyanamid.

DMDAAC = dimethyldiallyl ammonium chloride, MWT 130,000, as determined by light scattering.

AA/AS = copolymer of acrylic acid and allyl sulphonic acid.

Examples 1 to 20

Synergism data on the inhibition of iron oxide deposition by a combination of the copolymer and other building blocks was determined by zeta potential measurements. The test solution consisted of 500 mg/l iron oxide ($Fe_2O_3$) and 0.01M sodium nitrate (for ionic strength) at pH 7.1 to 7.2. Caustic was used to adjust the pH. The test solutions were treated with 1.0 mg/l of the copolymer and the various building blocks, alone or with a combination of 0.5 mg/l of the copolymer of and 0.5 mg/l of the other building block. The pH of the test solution was readjusted to 7.1 to 7.2, if necessary.

The change in zeta potential of the control (without inhibitor) with the inhibited solutions was determined. Synergism was noted when that change was greater in the solutions treated by the combination of building blocks than with the building blocks alone. The results are summarized in the Table.

6

## TABLE

## $Fe_2O_3$

500 mg/l $Fe_2O_3$, 0.01M $NaNO_3$, pH 7.10-7.16

| Example | Component A | Δ Zeta Potential (mv)[a] | Component B | Δ Zeta Potential (mv) | A + B Δ Zeta Potential (mv) | Synergism |
|---|---|---|---|---|---|---|
| 1 | 60/40 AA/AMPS | 30 | PBS-AM | 31 | 37 | X |
| 2 | 60/40 AA/AMPS | 30 | HEDP | 32 | 34 | X |
| 3 | 60/40 AA/AMPS | 50 | AMPS | 48 | 49 | |
| 4 | 60/40 AA/AMPS | 50 | P-35 | 49 | 50 | |
| 5 | 60/40 AA/AMPS | 50 | Natrol 42 | 54 | 47 | |
| 6 | 60/40 AA/AMPS | 50 | Belclene 500 | 49 | 47 | |
| 7 | 60/40 AA/AMPS | 30 | PAA | 24 | 28 | |
| 8 | 60/40 AA/AMPS | 50 | Dioctyl Sulpho Succinate | 5 | 45 | |
| 9 | 60/40 AA/AMPS | 30 | PMA | 30 | 26 | |
| 10 | 60/40 AA/AMPS | 50 | CL-361S | 1 | 44 | |
| 11 | 60/40 AA/AMPS | 30 (50) | Versa TL-70 | 28 | (40) | |
| 12 | 60/40 AA/AMPS | 50 | Sodium Hexa- meta Phosphate | 41 | 40 | |
| 13 | 60/40 AA/AMPS | 50 | $PO_4^{-3}$ | 30 | 42 | |
| 14 | 60/40 AA/AMPS | 50 | Versa TL-3 | 49 | 39 | |
| 15 | 60/40 AA/AMPS | 30 | AMP | 26 | 23 | |
| 16 | 60/40 AA/AMPS | 50 | DMDAAC | 26 | 30 | |
| 17 | Versa TL-3 | 23 | PBS-AM | 26 | 35 | X |
| 18 | 70/30 AA/AS | 22 | PBS-AM | 26 | 51 | X |
| 19 | Versa TL-3 | 23 | HEDP | 26 | 60 | X |
| 20 | 70/30 AA/AS | 22 | HEDP | 26 | 24 | |

[a]The AA/AMPS Δ zeta potential for $Fe_2O_3$ shifted during the experimentation. The zeta potential for AA/AMPS was measured for each example. Aging of iron oxide is believed to be the cause of the zeta potential shift.

## CLAIMS

1.     A method of inhibiting the formation of insoluble alluvial, metal oxide and metal hydroxide deposits in an aqueous system that is a cooling system, a reverse osmosis system, a desalination plant or a gas scrubber, comprising adding to the water in the system at least 0.1 mg/l of a water-soluble polymer comprising an unsaturated carboxylic acid and an unsaturated sulphonic acid, or their salts, the weight ratio of carboxylic to sulphonic acid being in the range 1:20 to 20:1, and at least one phosphonate.

2.     A method as claimed in Claim 1, in which the polymer has a weight average molecular weight of less than 25,000, as determined by low-angle laser light scattering, the metal oxide or hydroxide is zinc oxide and/or chromous oxide or zinc hydroxide, and the phosphonate is one or more of hydroxyethylidene diphosphonic acid, amino tri(methylene phosphonic acid), a carboxyl phosphonate, and mixtures thereof.